# EUROPEAN PATENT SPECIFICATION

(11) **EP 0 364 558 B1**
(45) Date of publication and mention of the grant of the patent: **12.10.1994**
(21) Application number: 89904413.5
(22) Date of filing: 13.03.1989
(51) Int. Cl.: G06F 11/20, G06F 13/22, G06F 13/36, H04L 12/28

(54) **DATA COMMUNICATIONS SYSTEM AND METHOD THEREFOR**
DATENÜBERTRAGUNGSSYSTEM UND VERFAHREN DAFÜR
SYSTEME DE COMMUNICATION DE DONNEES ET PROCEDE POUR CELUI-CI

(30) Priority: 25.03.1988 JP 69963/88; 27.02.1989 US 316270
(43) Date of publication of application: 25.04.1990
(73) Proprietor: AT&T GLOBAL INFORMATION SOLUTIONS INTERNATIONAL INC., Dayton, Ohio 45479 (US)
(72) Inventor: MORITA, Sadao, Fujisawa-shi Kanagawa (JP); SHIMASAKI, Haruo, Chigasaki-shi Kanagawa (JP); TSUTSUMI, Kiyohiko, Isehara-shi Kanagawa (JP)
(74) Representative: Robinson, Robert George
(86) International application number: PCT/US89/00991
(87) International publication number: WO 89/09443

(56) References cited:
- EP-A- 0 187 523
- GB-A- 2 068 690
- US-A- 4 456 956
- US-A- 4 596 012

## Description

### Technical Field

This invention relates to data communications systems of the kind including a plurality of main terminals and a plurality of satellite terminals, said terminals being interconnected by a communications line.

The invention also relates to a method for controlling the flow of data among a plurality of main terminals and a plurality of satellite terminals.

The invention has a particular application to point of sale systems.

### Background Art

In the field of data processing, the use of point of sale (POS) terminals has required and also has enabled rapid and accurate transfer of information from one location to another in a business operation. In the case of department stores, the sales data may be transmitted or communicated from one or more terminals throughout the store to a central computer or processing unit. A filing system may be provided to maintain inventory and price data on the huge number of items that are sold in the store. The filing system and the control therefor provide means for reading and updating data and information regarding the constantly changing inventory and prices for the overall operation.

U.S. Patent No. 4,468,750 discloses a point of sale system including a primary media terminal, a plurality of satellite terminals constructed and operated in a similar manner to the media terminal, and a backup media terminal. A diskette inserted into the primary media terminal received and stores data from the satellite terminals. In the event of a malfunction of the primary media terminal, the backup media terminal may be converted into the primary media terminal for the system by transferring the diskette from the faulty primary media terminal and inserting it into the the backup media terminal. The conversion of the backup media terminal to the primary media terminal is thus a relatively slow and cumbersome manual operation, and interrupts the normal operational usage of the system.

The document US-A-4 596 012 discloses a data communications system, including a plurality of master stations and a plurality of slave stations interconnected by a communications line. Each master station contains a bus controller and a bus controller activator. The bus controller controls the transmission of data on the communications line. The bus controller activator monitors the state of the communications line in relation to data appearing thereon and in response to detecting that there is no bus activity transmits, after a random time schedule, a take control message to itself and to the other master stations. If other master stations transmit a take control message at the same time, messages will be garbled, bus activity is detected, a new random time schedule is generated and the process is repeated until only one master station transmits and receives its own take control message.

The document US-A-4 456 956 discloses a computer network with a plurality of computer stations interconnected by a bus where access to the bus is controlled by the adapter unit of the computer station currently in charge. Control of the bus is continually passed from one live adapter to another. If the bus becomes inactive, all adapters detecting this enter election mode, where each adapter sends a pulse over the bus and monitors the bus for a period of time directly proportional to its unique number (priority). The winning adapter unit (the adapter unit with the lowest number) sends out another pulse and takes over the bus control, the other adapter units detecting said another pulse and becoming losers in the election.

Therefore, according to one aspect of the present invention, there is provided data communication system as defined in claim 1, including a plurality of main terminals and a plurality of satellite terminals, said terminals being interconnected by a communications line, wherein said main terminals include respective link control devices coupled to said communications line, said link control devices being of different priorities and one of said plurality of link control devices controlling data transmission and reception among said terminals in accordance with a request for data; each link control device including line controlling means adapted to control the transmission of data on said communications line from said satellite terminals in accordance with requests for data; and line monitoring means adapted to monitor the state of said communications line in relation to data appearing thereon, characterized in that each link control device further includes a confirmation requesting means and a priority judging means, said line monitoring means being adapted to supply a failure detection signal to the confirmation requesting means and the priority judging means in the same link control device in response to detecting an abnormality in said state of said communications line; said confirmation requesting means being adapted in response to said failure detection signal to transmit a priority request signal to the other link control devices; priority judging means determining a priority in response to said failure detection signal from its line monitoring or a priority request signal from another link control device such that a link control signal is sent by priority judging means of the link control device which has the highest priority to said line controlling means of the link control device which has the highest priority, whereby said line controlling means of the link control device which has the highest priority assumes control of the transmission of data on said communications line from said satellite terminals, the line monitoring means of the other link control devices returning to monitoring the state of said communications line upon detecting the data on said communications line.

According to another aspect of the present invention, there is provided a method as defined in claim 6 for controlling in a data communication system according to claim 1 the flow of data among a plurality of main terminals and a plurality of satellite terminals over a communications line connecting said terminals, wherein said main terminals include respective link control devices of different priorities coupled to said communications line including the steps of: controlling data transmission and reception among said terminals in accordance with a request for data; and monitoring the condition of said line in accordance with data appearing on said line, characterized by the steps of: generating a failure detection signal in one of said link control devices upon detecting an abnormality in the condition on said communications line; applying said failure detection signal to confirmation requesting means and priority judging means in the same link control device which detected abnormality; sending a priority request signal to the other link control devices and, in response thereto, operating respective priority judging means in the other link control devices in response to said failure detection signal; determining the priority of said link control devices in response to said failure detection signal and said priority request signal, causing the link control device having the highest priority to assume control of the transmission of data over communications said line; and returning the other link control devices to monitoring the condition of said communications line.

It will be appreciated that a data communications system according to the invention has the advantage that an alternative link control device automatically controls the data communication when one link control device fails, without the need for a manual line switching operation, thereby increasing system reliability by reducing or avoiding system down time. Furthermore, the system is particularly suited to operation over a two-wire line or circuit, avoiding the complex line switching arrangements such as are associated with four-wire lines or circuits.

### Brief Description of the Drawing

One embodiment of the present invention will now be described by way of example, with reference to the accompanying drawings, in which:-
Fig. 1 is a block diagram showing the structure of the link control system for use in a POS system according to a preferred embodiment of the present invention;
Fig. 2 is a block diagram illustrating the principle of the link control device;
Fig. 3 is a flow chart illustrating the recovering operation of the system; and
Fig. 4 is a flow chart illustrating the restoring operation of the link control device which has been repaired.

### Best Mode for Carrying Out the Invention

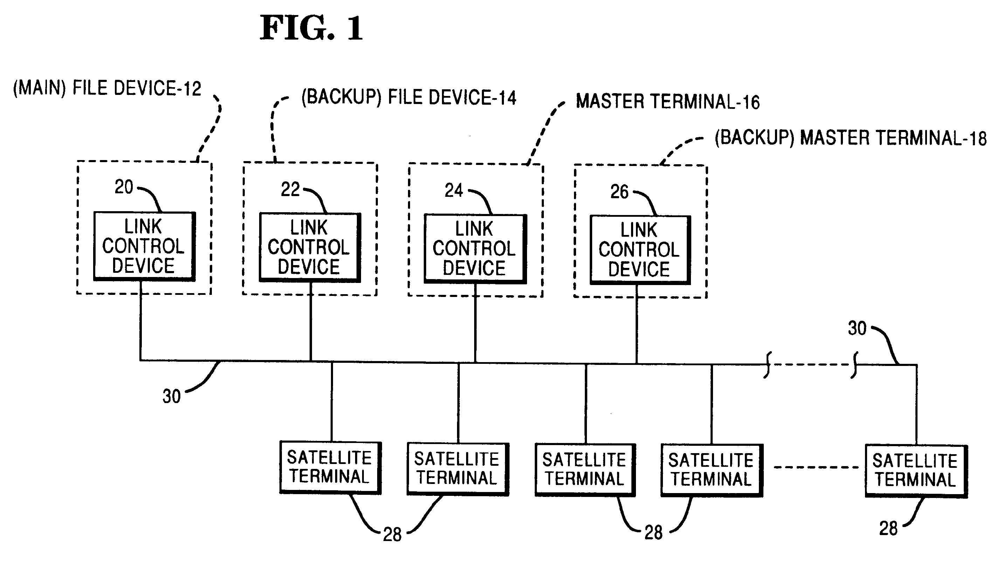

Fig. 1 is a diagram showing a preferred embodiment of a POS system in which the link control system of the present invention is employed. A plurality of main terminals 12, 14, 16 and 18 are provided in the POS system. A plurality of link control devices 20, 22, 24 and 26 are respectively provided within the main terminals 12, 14, 16 and 18 of the POS system. The main terminals consist of and are described as a main file device 12, a backup file device 14, a master terminal 16, and a backup master terminal 18. It is not always neccessary to provide the link control devices 20, 22, 24 and 26 in all the respective main terminals 12, 14, 16 and 18 and the number of the link control devices can be increased or decreased as required. For example, it may not be necessary to provide a link control device in the backup master terminal 18. The link control devices 20, 22, 24 and 26 are different from one another in ranking of priority. Although the highest ranking of priority is generally offered to the link control device 20 in the main file device 12, the priority ranking can be appropriately changed as required. In the preferred embodiment, the ranking of priority follows the order of the link control devices from 20 to 22 to 24 to 26.

Assuming that all the link control devices 20, 22, 24 and 26 are in normal operation, the link control device 20 of the highest priority controls the data communication within the system. The link control device 20 polls a plurality of individual satellite terminals 28 in a predetermined cycle and receives/transmits data from/to a satellite terminal 28 from which a request to transmit/receive data is received. In general, the polling is performed on any one of the terminals 12, 14, 16 and 18 at a rate of one time per 100 milliseconds, so that as long as the link control device 20 is in the normal operation, data should appear on a two-wire line or circuit 30 at least one time per 100 milliseconds. The link control device 20 which performs the polling operation is referred to as a primary device. The receiving/transmitting of data by polling operation of the primary device 20 is well known in the art and hence the description thereof is omitted from this specification.

The link control devices 22, 24 and 26 (each hereinafter referred to as a secondary device), other than the primary device 20, always monitor the line 30 to determine whether or not the primary device is in good order as well as responding to the polling from the primary device.

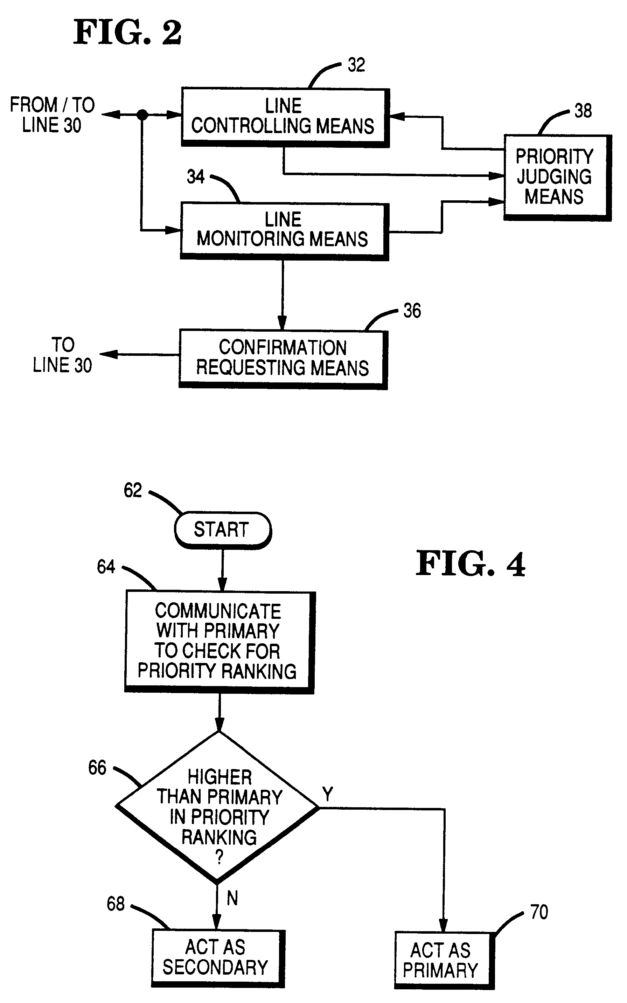

Next, the case wherein the primary device 20 is out of order will be described with reference to Figs. 1 and 2. Fig. 1 is a diagram of the link control system and Fig. 2 is a block diagram of the principle of the link control devices 20, 22, 24 and 26. A line controlling means 32 (Fig. 2) is provided for controlling the line 30 for polling operation of the primary device 20 or for responding to the polling from the primary device, as well as for responding to the polling from the secondary device. A confirmation requesting means 36 is provided for sending out a request to confirm the priority signal to the secondary devices 22, 24 and 26 when a line monitoring means 34 detects the failure of the line 30. A priority judging means 38 is provided for judging whether or not the device 20 can act as a primary device when the line monitoring means 34 detects the failure of the line 30 and a request to confirm the priority is made from a secondary device 22, 24 or 26.

The line monitoring means 34 checks to see whether or not data appears on the line 30 within a predetermined period of time, for example, 500 milliseconds. In the normal operation, the primary device 20 must poll any one of the terminals 14, 16, 18 or 28 (Fig. 1) at least one time per 100 milliseconds and hence data must appear on the line 30 at least one time per 100 milliseconds. In case the primary device 20 is out of order, no polling operation is performed, so that no data appears on the line 30 and hence the line monitoring means 34 detects the failure of the line. Assuming that the secondary device 24 detects the failure of the line 30, the line monitoring means 34 of such secondary device 24 will send a failure detection signal to the confirmation requesting means 36 and to the priority judging means 38. The confirmation requesting means 36 then sends a request to confirm the priority signal to the other secondary devices 22 and 26 via the line 30. The priority judging means 38 judges whether or not the secondary device of its own is at the highest ranking of priority among the now working secondary devices 22, 24 and 26. The secondary device 24 is at the priority ranking lower than that of the secondary device 22 and hence cannot act as the primary device.

The secondary devices 22 and 26 receive the request to confirm the priority signal from the secondary device 24 by the line controlling means 32 (Fig. 2) of their own and send the signals thus received to the priority judging means 38 of their own which, then, judge the ranking of priority of their own simultaneously with the judging operation of the secondary device 24. The secondary device 26 cannot act as the primary device due to the presence of the secondary devices 22 and 24 at the higher ranking of priority. The priority judging means 38 of the secondary device 26 confirms that the secondary device 22 is at the highest ranking of priority to thus send a link control signal to the line controlling means 32. When the line controlling means 32 receives the link control signal, the secondary device 22 can act as the primary device to start the polling operation. Each of the link control devices 20, 22, 24 and 26 (Fig. 1) includes a central processing unit (CPU), a read only memory (ROM), a random access memory (RAM), and other necessary control circuits (not shown).

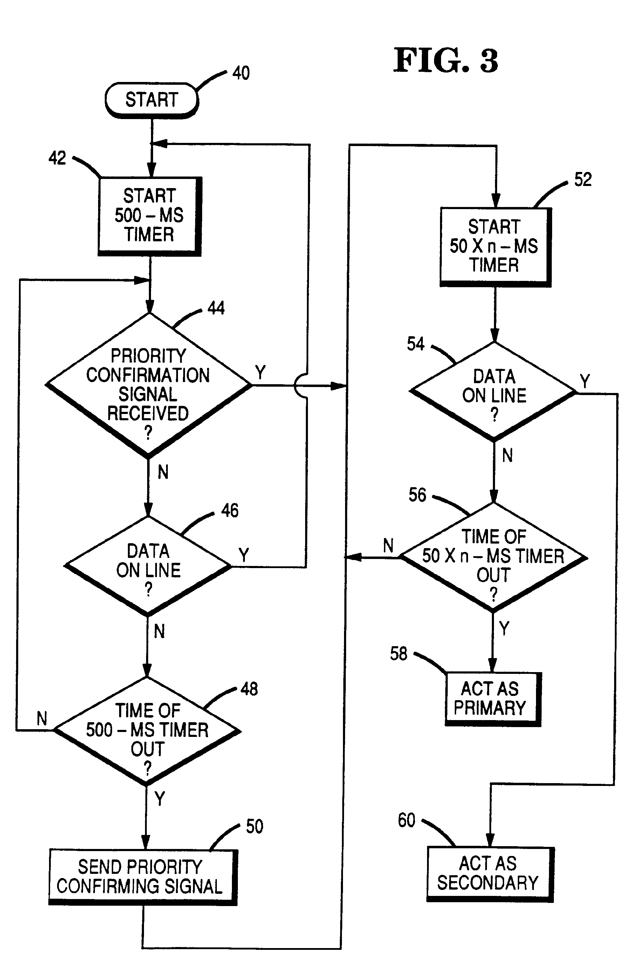

Fig. 3 is a flow chart illustrating the restoring or recovering operation performed by the secondary device for the line control in case the primary device is down. The process steps in blocks 42, 44, 46 and 48 in Fig. 3 are steps for the operation of the line monitoring means 34 in Fig. 2. The process step in block 50 is for the operation of the confirmation controlling means 36, the process steps in blocks 52, 54 and 56 are for the operation of the priority judging means 38, and the process steps in blocks 58 and 60 are for the operation of the line controlling means 32. Each of the link control devices 20, 22, 24 and 26 is constructed in the same manner except for their priority ranking. In view of this same construction, only the secondary device 24 will be described in detail.

The secondary device 24 starts (block 40) a 500 millisecond timer (block 42) and then continually checks to see whether or not a request to confirm the priority is sent out from any of the remaining secondary devices 22 or 26 (block 44) and whether or not data appears on the line 30 (block 46). When the request to confirm the priority is sent from the above-mentioned secondary device 24 (block 44), the secondary device 22 goes to the operation indicated in the process step represented by block 52. On the other hand, when no request to confirm the priority is received and no data appears on the line 30, the secondary device 24 goes to the process step represented by block 48 to check whether or not the time of the 500 millisecond timer is timed out and, if not, returns to block 42 to repeat the same procedure. In the normal operation of the primary device, as 20, the polling operation is performed in a cycle shorter than 500 milliseconds, so that the data appears on the line 30 before the time of the 500 millisecond timer is timed out. When the secondary device, as 24, detects the appearance of the data on the line 30 in block 46, the process returns to block 42 to re-start the 500 millisecond timer to repeat the same procedures (blocks 42-48).

Now, assuming that the primary device 20 is down, the time of the 500 millisecond timer is timed out in block 48 and the secondary device 24 goes to block 50 wherein the request to confirm the priority signal is sent to the other secondary devices 22 and 26. Then, the secondary device 24 goes to block 52 to start a 50 x n (a predetermined priority ranking of its own) millisecond timer and to check whether or not the data appears on the line 30 (block 54). The other secondary devices 22 and 26 receive the request to confirm the priority signals from the secondary device 24 in block 44 to start their 50 x n millisecond timers. Then, the secondary devices 22, 24 and 26 check to see whether or not the times of the 50 x n millisecond timers are timed out (block 56). Now, the secondary devices 22, 24 and 26 are respectively at the second, third and fourth priority rankings, so that the timers are respectively set to 50 x 2 = 100 milliseconds, 50 x 3 = 150 milliseconds and 50 x 4 = 200 milliseconds in that order starting from the secondary device 22. Accordingly, the time of the timer of the secondary device 22 is first timed out, so that the secondary device 22 goes to block 58 to act as the primary device, whereupon the line controlling means 32 of the secondary device 22 starts the polling operation. When the secondary device 22 starts the polling operation, the data appears on the line 30, so that the secondary devices 24 and 26 detect the data on the line 30 in block 54 and go to block 60 to keep on monitoring the line as secondary devices.

Next, the operation to be performed by a damaged link control device after it has been repaired and restored to the system under normal operation will be described with reference to Fig. 4. It is assumed that the link control device 20 has been repaired and restored to the system (block 62). The link control device 20, when polled from the primary device 22, communicates with such primary device 22 to confirm the priority ranking of the primary device 22 (block 64) and to check whether device 20 is higher than the primary device 22 in priority ranking (block 66). Now, the link control device 20 is higher in priority ranking than the primary device 22, so that the primary device 22 transfers the right of primacy to the link control device 20, wherein the primary device 22 acts as the secondary device (block 68). If the link control device 20 is higher in priority, the link control device 20 acts as the primary device (block 70). Even if the damaged link control device 26 has been restored after being repaired, the link control device 26 is lower in priority ranking than the primary device 22, so that device 26 acts as the secondary device. Accordingly, a link control device which is the highest in priority ranking of the link control devices under operation can control the line 30 of the overall system.

As has been described above, the present invention is constructed such that a plurality of link control devices 20, 22, 24 and 26 are provided on a line or circuit 30 such that when one link control device is damaged, another link control device of the second or next priority ranking can automatically control the line 30. In this regard, a stable link control system which requires no line switcher and which will not be down if a link control device is damaged can be constructed and maintained.

It is thus seen that herein shown and described is a link control system that enables rapid response to requests from terminals. When one of the link control devices has failed or is down, another link control device becomes the primary device and maintains the system in operation.

## Claims

1. A data communication system, including a plurality of main terminals (12,14,16,18) and a plurality of satellite terminals (28), said terminals (12,14,16,18,28) being interconnected by a communications line (30), wherein said main terminals (12,14, 16, 18) include respective link control devices (20,22,24,26) coupled to said communications line (30), said link control devices (20,22,24,26) being of different priorities and one of said plurality of link control devices (20,22,24,26) controlling data transmission and reception among said terminals (12,14,16,18,28) in accordance with a request for data; each link control device (e.g. 20) including line controlling means (32) adapted to control the transmission of data on said communications line (30) from said satellite terminals (28) in accordance with requests for data; and line monitoring means (34) adapted to monitor the state of said communications line (30) in relation to data appearing thereon, characterized in that each link control device (e.g. 20) further includes a confirmation requesting means (36) and a priority judging means (38), said line monitoring means (34) being adapted to supply a failure detection signal to the confirmation requesting means (36) and the priority judging means (38) in the same link control device in response to detecting an abnormality in said state of said communications line (30); said confirmation requesting means (36) being adapted in response to said failure detection signal to transmit a priority request signal to the other link control devices (e.g. 22,24,26); priority judging means (38) determining a priority in response to said failure detection signal from its line monitoring means (34) or a priority request signal from another link control device (e.g. 22,24,26) such that a link control signal is sent by priority judging means of the link control device which has the highest priority to said line controlling means (32) of the link control device (20,22,24,26) which has the highest priority, whereby said line controlling means (32) of the link control device which has the highest priority assumes control of the transmission of data on said communications line (30) from said satellite terminals (28), the line monitoring means (34) of the other link control devices (20,22,24,26) returning to monitoring the state of said communications line (30) upon detecting the data on said communications line.

2. A data communications system according to claim 1, characterized in that one of said link control devices (e.g. 20) operates as the primary device by reason of having higher priority than the remaining link control devices (e.g. 22,24,26).

3. A data communications system according to claim 1, characterized in that one of said link control devices (e.g. 22) having a lower priority operates as the primary device when a link control device (e.g. 20) having a higher priority is inoperative.

4. A data communications system according to claim 1, characterized by timing means operably associated with each of the link control devices (20,22,24,26) and set for timing out in accordance with respective priorities.

5. A data communications system according to any one of the preceding claims, characterized in that said system is a point of sale system and in that said main terminals (12,14,16,18) include a file device (12) and a master terminal (16) for said point of sale system.

6. A method for controlling in a data communication system according to claim 1 the flow of data among a plurality of main terminals (12,14,16,18) and a plurality of satellite terminals (28) over a communications line (30) connecting said terminals (12,14,16,18,28) wherein said main terminals include respective link control devices (20,22,24,26) of different priorities coupled to said communications line; including the steps of: controlling data transmission and reception among said terminals (12,14,16,18,28) in accordance with a request for data appearing on said line (30), characterized by the steps of: generating a failure detection signal in one of said link control devices (20,22,24,26) upon detecting an abnormality in the condition on said communications line (30); applying said failure detection signal to confirmation requesting means (36) and priority judging means (38) in the same link control device which detected abnormality; sending a priority request signal to the other link control devices (22,24,26) and, in response thereto, operating respective priority judging means (38) in the other link control devices (20,22,24,26) in response to said failure detection signal; determining the priority of said link control devices (20,22,24,26,) in response to said failure detection signal and said priority request signal; causing the link control device (20,22,24,26) having the highest priority to assume control of the transmission of data over said communications line (30); and returning the other link control devices (20,22,24,26) to monitoring the condition of said communications line (30).

7. A method according to claim 6, characterized in that said step of determining the priority of said link control devices (20,22,24,26) is effected using respective time-out operations for said link control devices (20,22,24,26).

## Patentansprüche

1. Daten-Kommunikationssystem einschließlich mehrerer Hauptterminale (12,14,16,18) und mehrerer dezentralisierter Terminale (28) wobei die genannten Terminale (12,14,16,18,28) durch eine Kommunikationsleitung (30) miteinander verbunden sind, wobei die genannten Hauptterminale (12,14,16,18) entsprechende Verbindungssteuerelemente (20,22,24,26) aufweisen, die mit der genannten Kommunikationsleitung (30) verbunden sind, wobei die genannten Verbindungssteuerelemente (20,22,24,26) verschiedene Prioritäten aufweisen und eins dieser Verbindungssteuerelemente (20,22,24,26) die Datenübertragung und den Empfang der genannten Terminale (12,14,16,18,28) gemäß einer Datenanforderung überwachen; jedes Verbindungssteuerelement (z.B. 20) einschließlich des Leitungssteuerelements (32) dazu dient, die Datenübertragung über die genannte Kommunikationsleitung (30) von den genannten dezentralisierten Terminalen (28) gemäß der Datenanforderung zu steuern; sowie einem Leitungskontrollelement (34) zur Zustandsüberwachung der genannten Kommunikationsleitung (30) bezüglich der darin enthaltenen Daten, dadurch gekennzeichnet, daß jedes Verbindungssteuerelement (z.B. 20) außerdem ein Bestätigungsanforderungselement (36) und ein Prioritätsbeurteilungselement (38) aufweist, wobei das genannte Leitungskontrollelement (34) ein Fehlererkennungsignal an das Bestätigungsanforderungselement (36) und das Prioritätsbeurteilungselement (38) im gleichen Verbindungssteuerelement als Antwort auf die Erkennung eines abnormen Zustandes der genannten Kommunikationsleitung (30) sendet, wobei das genannte Bestätigungsanforderungselement (36) als Antwort auf das genannte Fehlererkennungssignal ein Prioritätsanforderungssignal an die anderen Verbindungssteuerelemente (z.B 22,24,26) sendet; ein Prioritätsbeurteilungselement (38) zur Feststellung einer Priorität als Antwort auf das genannte Fehlererkennungssignal von dessen Leitungskontrollelement (34) oder ein Prioritätsanforderungssignal von einem anderen Verbindungssteuerelement (z.B. 22,24,26) so daß ein Verbindungssteuersignal vom Prioritätsbeurteilungselement des Verbindungssteuerelements mit der höchsten Priorität an das genannte Leitungssteuerelement (32) des Verbindungssteuerelements (20,22,24,26) mit der höchsten Priorität gesandt wird, wobei das genannte Leitungssteuerelement (32) des Verbindungssteuerelements mit der höchsten Priorität die Kontrolle über die Datenübertragung über die genannte Kommunikationsleitung (30) von den genannten dezentralisierten Terminalen (28) übernimmt und die anderen Leitungskontrollelemente (34) der anderen Verbindungssteuerelemente (20,22,24,26) bei Erkennung der Daten in der genannten Kommunikationleitung zur Zustandskontrolle der genannten Kommunikationsleitung (30) zurückkehren.

2. Daten-Kommunikationssystem gemäß Anspruch 1, dadurch gekennzeichnet, daß eins der genannten Verbindungssteuerelemente (z.B. 20) als primäres Element wegen seiner höheren Prioritätseinstufung im Vergleich zu den anderen Verbindungssteuerelementen (z.B. 22, 24,26) dient.

3. Daten-Kommunikationssystem gemäß Anspruch 1, dadurch gekennzeichnet, daß eins der genannten Verbindungssteuerelemente (z.B. 22) mit einer niedrigeren Priorität die Rolle des primären Geräts übernimmt, wenn ein Verbindungssteuerelement (z.B.20) mit einer höheren Priorität ausfällt.

4. Daten-Kommunikationssystem gemäß Anspruch 1, dadurch gekennzeichnet, daß ein Zeitgeber mit jedem der Verbindungssteuerelemente (20,22,24,26) betrieben wird und gemäß der jeweiligen Priorität zur Zeitangabe dient.

5. Daten-Kommunikationssystem gemäß jedem der vorstehenden Ansprüche, dadurch gekennzeichnet, daß das genannte System ein Kassenterminalsystem ist und dadurch, daß die genannten Hauptterminale (12,14,16,18) ein Dateigerät (12) und ein Hauptterminal (16) für das genannte Kassenterminalsystem enthalten.

6. Verfahren für Daten-Kommunikationssysteme gemäß Anspruch 1 zur Kontrolle des Datenstroms zwischen mehreren Hauptterminalen (12,14,16,18) und mehreren dezentralisierten Terminalen (28) über eine Kommunikationsleitung (30) zur Verbindung der genannten Terminale (12,14,16,18,28), wobei die genannten Haupterminale entsprechende Steuerelemente (20,22,24,26) mit unterschiedlichen Prioritäten enthalten, die mit der genannten Kommunikationsleitung verbunden sind, einschließlich folgender Schritte: Steuerung von Senden und Empfang der Daten zwischen den genannten Terminalen (12,14,16,18,28) gemäß einer Datenanforderung; und Kontrolle des Zustandes der genannten Leitung (30) gemäß der in der genannten Leitung (30) enthaltenen Daten, gekennzeichnet durch folgende Schritte: Erzeugung eines Fehlererkennungssignals in einem der genannten Verbindungssteuerelemente (20,22,24,26) bei Feststellung eines abnormalen Zustandes in der genannten Kommunikationsleitung (30); Senden des genannten Fehlererkennungssignals an das Bestätigungsanforderungselement (36) und das Prioritätsbeurteilungselement (38) im gleichen Verbindungssteuerelement, das den abnormalen Zustand erkannte; Senden eines Prioritätsanforderungssignals an die anderen Verbindungssteuerelemente (22,24,26) und als Antwort darauf, Betrieb des jeweiligen Prioritätsbeurteilungselements (38) der anderen Verbindungssteuerelemente (20,22,24,26) als Antwort auf das genannte Fehlererkennungssignal; Feststellung der Priorität der genannten Verbindungssteuerelemente (20,22,24,26) als Antwort auf das genannte Fehlererkennungssignal und das genannte Prioritätsanforderungssignal; Veranlassung des Verbindungssteuerelements (20,22,24,26) mit der höchsten Priorität, die Kontrolle über die Datenübertragung durch die genannte Kommunikationsleitung (30) zu übernehmen; und Rückkehr der anderen Verbindungssteuerelemente (20,22,24,26) zur Zustandskontrolle der genannten Kommunikationsleitung (30).

7. Verfahren gemäß Anspruch 6, dadurch gekennzeichnet, daß der Schritt zur Feststellung der Priorität der genannten Verbindungssteuerelemente (20,22,24,26) mit jeweils ablaufenden Zeitspannen für die genannten Verbindungssteuerelemente (20,22,24,26) bewirkt wird.

## Revendications

1. Un système téléinformatique, comportant une pluralité de terminaux principaux (12, 14, 16, 18) et une pluralité de terminaux satellites (28), lesdits terminaux (12, 14, 16, 18, 28) étant interconnectés par une ligne téléinformatique (30), dans lequel lesdits terminaux principaux (12, 14, 16, 18) comportent des dispositifs de commande de liaison respectifs (20, 22, 24, 26) accouplés à ladite ligne téléinformatique (30), lesdits dispositifs de commande de liaison (20, 22, 24, 26) ayant des priorités différentes et un de ladite pluralité de dispositifs de commande de liaison (20, 22, 24, 26) commandant la transmission et la réception des données parmi lesdits terminaux (12, 14, 16, 18, 28) conformément à une demande de données; chaque dispositif de commande de liaison (par ex. 20) comportant un moyen de commande de ligne (32) adapté pour commander la transmission des données sur ladite ligne téléinformatique (30) à partir desdits terminaux satellites (28) conformément aux demandes de données; et un moyen de suivi de ligne (34) adapté pour assurer le suivi de l'état de ladite ligne téléinformatique (30) en ce qui concerne les données apparaissant sur cette dernière, caractérisé en ce que chaque dispositif de commande de liaison (par ex. 20) comporte, de plus, un moyen de demande de confirmation (36) et un moyen de jugement de priorité (38), ledit moyen de suivi de ligne (34) étant adapté pour fournir un signal de détection de défaillance au moyen de demande de confirmation (36) et au moyen de jugement de priorité (38) dans le même dispositif de commande de liaison en réponse à la détection d'une anomalie dans ledit état de ladite ligne téléinformatique (30); ledit moyen de demande de confirmation (36) étant adapté en réponse audit signal de détection de défaillance pour transmettre un signal de demande de priorité aux autres dispositifs de commande de liaison (par ex. 22, 24, 26); le moyen de jugement de priorité (38) déterminant une priorité en réponse audit signal de détection de défaillance issu de son moyen de suivi de ligne (34) ou à un signal de demande de priorité issu d'un autre dispositif de commande de liaison (par ex. 22, 24, 26) de façon à ce qu'un signal de commande de liaison soit envoyé par le moyen de jugement de priorité du dispositif de commande de liaison qui a la plus grande priorité audit moyen de commande de ligne (32) du dispositif de commande de liaison (20, 22, 24, 26) qui a la plus grande priorité, par quoi ledit moyen de commande de ligne (32) du dispositif de commande de liaison qui a la plus grande priorité assume la commande de la transmission de données sur ladite ligne téléinformatique (30) à partir desdits terminaux satellites (28), le moyen de suivi de ligne (34) des autres dispositifs de commande de liaison (20, 22, 24, 26) reprenant le suivi de l'état de ladite ligne téléinformatique (30) à la détection des données sur ladite ligne téléinformatique.

2. Un système téléinformatique conformément à la revendication 1, caractérisé en ce que l'un desdits dispositifs de commande de liaison (par ex. 20) sert de dispositif primaire étant donné qu'il a une plus grande priorité que les autres dispositifs de commande de liaison (par ex. 22, 24, 26).

3. Un système téléinformatique conformément à la revendication 1, caractérisé en ce que l'un desdits dispositifs de commande de liaison (par ex. 22) ayant une priorité moins grande sert de dispositif primaire lorsqu'un dispositif de commande de liaison (par ex. 20) ayant une plus grande priorité est inopérant.

4. Un système téléinformatique conformément à la revendication 1, caractérisé par un moyen de temporisation associé de façon opérante à chacun des dispositifs de commande de liaison (20, 22, 24, 26), le temps étant réglé pour s'écouler conformément aux priorités respectives.

5. Un système téléinformatique conformément l'une quelconque des revendications précédentes, caractérisé en ce que ledit système est un système point de vente et en ce que lesdits terminaux principaux (12, 14, 16, 18) comportent un dispositif de fichier (12) et un terminal maître (16) pour ledit système point de vente.

6. Une méthode pour commander dans un système téléinformatique conformément à la revendication 1 le flux de données parmi une pluralité de terminaux principaux (12, 14, 16, 18) et une pluralité de terminaux satellites (28) sur une ligne téléinformatique (30) connectant lesdits terminaux (12, 14, 16, 18, 28), en quoi lesdits terminaux principaux comportent des dispositifs de commande de liaison respectifs (20, 22, 24, 26), ayant des priorités différentes, accouplés à ladite ligne téléinformatique, comportant les étapes de: la commande de la transmission et de la réception des données parmi lesdits terminaux (12, 14, 16, 18, 28) conformément à une demande de données; et le suivi de l'état de ladite ligne (30) conformément aux données apparaissant sur ladite ligne (30), caractérisé par les étapes de: la génération d'un signal de détection de défaillance dans l'un desdits dispositifs de commande de liaison (20, 22, 24, 26) à la détection d'une anomalie au niveau de l'état sur ladite ligne téléinformatique (30); l'application dudit signal de détection de défaillance au moyen de demande de confirmation (36) et au moyen de jugement de priorité (38) dans le même dispositif de commande de liaison qui a détecté l'anomalie; l'envoi d'un signal de demande de priorité aux autres dispositifs de commande de liaison (22, 24, 26) et, en réponse à ce dernier, la mise en oeuvre des moyens de jugement de priorité respectifs (38) dans les autres dispositifs de commande de liaison (20, 22, 24, 26) en réponse audit signal de détection de défaillance; la détermination de la priorité desdits dispositifs de commande de liaison (20, 22, 24, 26) en réponse audit signal de détection de défaillance et audit signal de demande de priorité, faisant en sorte que le dispositif de commande de liaison (20, 22, 24, 26) ayant la plus grande priorité assume la commande de la transmission de données sur ladite ligne téléinformatique (30); et le retour des autres dispositifs de commande de liaison (20, 22, 24, 26) au suivi de l'état de ladite ligne téléinformatique (30).

7. Une méthode conformément à la revendication 6, caractérisée en ce que ladite étape de détermination de la priorité desdits dispositifs de commande de liaison (20, 22, 24, 26) est réalisée à l'aide d'opérations de temporisation respectives pour lesdits dispositifs de commande de liaison (20, 22, 24, 26).
